(19)

Europäisches Patentamt
European Patent Office
Office européen des brevets

(11)  **EP 4 151 382 A1**

## (12) EUROPEAN PATENT APPLICATION
published in accordance with Art. 153(4) EPC

(43) Date of publication:
 **22.03.2023 Bulletin 2023/12**

(21) Application number: **21804027.7**

(22) Date of filing: **22.04.2021**

(51) International Patent Classification (IPC):
 ***B29B 17/04*** *(2006.01)*     ***B29B 17/02*** *(2006.01)*
 ***C08J 11/06*** *(2006.01)*     ***C08J 11/08*** *(2006.01)*
 ***C09D 9/00*** *(2006.01)*      ***C11D 1/72*** *(2006.01)*
 ***C11D 3/04*** *(2006.01)*      ***C11D 3/30*** *(2006.01)*

(52) Cooperative Patent Classification (CPC):
 **B29B 17/02; B29B 17/04; C08J 11/06; C08J 11/08;
 C09D 9/00; C11D 1/72; C11D 3/04; C11D 3/30;
 Y02W 30/52; Y02W 30/62**

(86) International application number:
 **PCT/JP2021/016238**

(87) International publication number:
 **WO 2021/230033 (18.11.2021 Gazette 2021/46)**

(84) Designated Contracting States:
 **AL AT BE BG CH CY CZ DE DK EE ES FI FR GB
 GR HR HU IE IS IT LI LT LU LV MC MK MT NL NO
 PL PT RO RS SE SI SK SM TR**
 Designated Extension States:
 **BA ME**
 Designated Validation States:
 **KH MA MD TN**

(30) Priority: **15.05.2020  JP 2020085949
 02.07.2020  JP 2020114757**

(71) Applicant: **DIC Corporation
 Tokyo 174-8520 (JP)**

(72) Inventors:
 • **SENTE, Yasuhiro
 Tokyo 174-8520 (JP)**
 • **NAGATA, Yoshitomo
 Tokyo 174-8520 (JP)**

(74) Representative: **Gerauer, Marc Philippé et al
 Kraus & Weisert
 Patentanwälte PartGmbB
 Thomas-Wimmer-Ring 15
 80539 München (DE)**

(54) **RECYCLING SYSTEM FOR RECYCLING PLASTIC LAMINATE INTO RECYCLED MATERIALS, RECYCLING METHOD, AND LAMINATE SEPARATION AND RECOVERY METHOD**

(57)    Provided are a recycling system, a recycling method, and a laminate separation and recovery method, in which a wet crushing facility capable of crushing a laminate in water and separating the laminate simultaneously with the crushing. The recycling system according to the invention is a recycling system for recycling a plastic laminate having at least two or more layers into a recycled material, the recycling system including: a wet crushing facility configured to separate the laminate into single layers while crushing the laminate in water by performing pressure feeding simultaneously with crushing; and a facility configured to dispense and recover a crushed mixture of each of the separated single layers.

EP 4 151 382 A1

**Description**

TECHNICAL FIELD

The present invention relates to a recycling system for recycling a plastic laminate into a recycled material, a recycling method, and a laminate separation and recovery method.

BACKGROUND ART

Currently, the recycling rate for classification and recovery of the plastic waste is 9% of all the manufactured plastics worldwide. Among 91% of the plastics, i.e., the garbage, 12% is incinerated, and 79% is either landfilled or discharged into the environment (NTL 1). One of the reasons why the recycling rate continues to be low is the difficulty in a classification and recovery system. In order to recycle the plastic, it is necessary to separate and recover, for each material, the waste plastic in which different types of plastic materials such as polyethylene (PE) and polypropylene (PP) are mixed. However, for most of plastic products such as a laminated film, different types of plastic materials are adhered and laminated to one another, and thus it is difficult to separate and recover each material. Therefore, there is a strong demand for construction of a recycling system capable of easily separating and recovering the waste plastic.

In addition, it is difficult to return a recycled plastic product to the same product from the viewpoint of cost, and basically, since the recycled plastic product is deteriorated every time it is recycled, the recycled plastic product has to be changed to a product whose quality is deteriorated. The reason why the quality of the recycled plastic deteriorates is that an ink or a pigment is mixed as impurities in the plastic. However, since the surfaces of many plastic products are subjected to printing, it is difficult to decolor the plastic products in a recycling step, and as a result, the recycled plastic products are with colors. Such recycled plastics containing a pigment, an ink, and the like are not only extremely low in commercial value due to coloring, but also are actually only plastics that are physically deteriorated due to impurities as the starting point, and there is also a need for a recycling method that produces high-quality recycled plastics.

In order to solve such a problem, PTL 1 proposes a recycling method in which an aluminum layer from a crushed multilayer film is dissolved with an alkali, then the multilayer film is separated according to the specific gravity difference, and further, valuable components are separated by selective melting in a solvent. PTL 2 proposes steps of crushing a printed film, removing an ink, rinsing, and drying, but these steps take time and are complicated.

In addition, PTL 3 provides a method of removing an ink from a printed film in a roll state using a solvent and a non-abrasive cloth. PTL 4 provides a method of removing an ink from a printed film in a roll state using a solvent, a brush, and a wiper blade, but only a non-printed film in which the ink is removed from the film in the roll state is prepared.

CITATION LIST

NON PATENT LITERATURE

NTL 1: Science Advances 19 Jul 2017: Vol. 3, no. 7, e1700782

PATENT LITERATURE

PTL 1: JP-A-2006-205160

PTL 2: JP-T-2015-520684

PTL 3: JP-T-2016-509613

PTL 4: JP-T-2018-514384

SUMMARY OF INVENTION

TECHNICAL PROBLEM

In the separation of the laminated film in the related art, ink removal or separation step is performed after the step of crushing the laminated film in a dry manner, and the step is general and takes time and is complicated. Therefore, an object of the invention is to provide a recycling system capable of simplifying a process and achieving productivity improvement and cost reduction.

SOLUTION TO PROBLEM

As a result of intensive studies to solve the above problems, the present inventors have found that a process of recycling a plastic laminate into a recycled material can be simplified by introducing, into a recycling system, a wet crushing facility for crushing the laminated film in a cleaning agent under a wet condition and separating the laminate into single layers simultaneously with the crushing.

That is, the invention provides a recycling system for recycling a plastic laminate having at least two or more layers into a recycled material, the recycling system including: a wet crushing facility configured to separate the laminate into single layers while crushing the laminate in water or a cleaning agent by performing pressure feeding simultaneously with the crushing; and a facility configured to dispense and recover a crushed mixture of each of the separated single layers.

In addition, the invention also provides a recycling method for recycling a plastic laminate having at least two or more layers into a recycled material, the recycling method including: a step 1 of separating the laminate into single layers while crushing the laminate in water or a cleaning agent using a wet crusher capable of performing pressure feeding simultaneously with crushing; and a step 2 of dispensing and recovering a crushed mixture of each of the separated single layers.

In addition, the invention provides a plastic laminate separation and recovery method for a plastic laminate having at least two or more layers, and the method including: a step 1 of separating the laminate into single layers while crushing a laminated film in water or a cleaning agent using a wet crusher capable of performing pressure feeding simultaneously with crushing; and a step 2 of dispensing and recovering a crushed mixture of each of the separated single layers.

In addition, the invention provides a method for producing a recycled plastic pellet, including: melting and then molding, by a molding machine, the crushed mixture of the single layer of the plastic laminate separated and recovered by the above separation and recovery method.

ADVANTAGEOUS EFFECTS OF INVENTION

According to the invention, the plastic laminate can be easily separated and simultaneously crushed, and the crushed single layer film can be recovered, classified and reused. According to the invention, the process of the recycling system can be simplified, and the productivity improvement and the cost reduction can be achieved.

DESCRIPTION OF EMBODIMENTS

A recycling system, a recycling method, and a plastic laminate separation and recovery method according to the invention are characterized by including a step 1 of separating a laminate into single layers while crushing the laminate in water by using a wet crusher capable of performing pressure feeding simultaneously with crushing in water or a cleaning agent, and a step 2 of recovering a crushed mixture of each of the separated single layers.

First, a wet crushing facility according to the invention will be described.

(Wet Crushing Facility)

One example of the wet crushing facility used in the recycling system according to the invention or a wet crusher used in the step 1 of separating a laminate into single layers is a wet crusher capable of simultaneously crushing, dispersing, mixing, and pressure feeding solid matters in a liquid. Specifically, a crusher having a mechanism for crushing a solid matter in a liquid by a shearing force and/or a frictional force is preferable, and a crusher having a mechanism capable of crushing and pressure feeding a plastic laminate is preferable. Examples of such a wet crusher include a wet crushing pump and a colloid mill.

(Wet Crushing Pump)

The wet crushing pump used in the invention preferably has a mechanism for crushing a solid matter in a liquid by a fixed blade and a rotary blade while pressure feeding the solid matter, and more preferably a mechanism for crushing the solid matter in three stages by a combination of four components including a cutting blade, a crushing impeller, a shroud ring, and a grid.

The plastic laminate is crushed in three stages by the wet crushing pump. The plastic laminate is roughly cut by a cutting blade of the fixed blade and an edge at an entrance of the crushing impeller of the rotary blade, and is then stirred and pressure-fed by an axial flow type crushing impeller, and a part of the plastic laminate comes into contact with and is cut by a blade portion of the shroud ring of the fixed blade. The laminated film that passes through the crushing impeller is further crushed and stirred in the grid, passes through the grid, is pressurized by a pressurizing impeller, and is pressure-fed to the next step.

The pressure-feeding speed is not particularly limited, and is preferably 0.03 m³/min or more in consideration of the peeling of an ink layer and the peeling and separation efficiency when the plastic laminate is separated into layers. The upper limit of the pressure-feeding speed is not particularly limited, and even at a standard operation speed of a device, for example, 1.4 m³/min, the ink can be sufficiently peeled off and the plastic laminate can be sufficiently separated into single layers.

The grid shape is not particularly limited. Since the grid diameter is involved in the size of the laminated film after crushing, the grid diameter is preferably 0.1 mm to 50 mm, and more preferably 1 mm to 20 mm in consideration of the crushing efficiency and the size of the laminated film after crushing.

Specific examples of the wet crushing pump include KD series manufactured by Husqvama AB, SUNCUTTER series manufactured by Nikuni Corporation, Disintegrator series manufactured by FURUKAWA INDUSTRIAL MACHINERY SYSTEMS Co., Ltd., INCRUSHER series manufactured by AIKAWA Iron Works Co., Ltd., and SCATTER manufactured by SANWA HYDROTECH CORPORATION.

(Colloid Mill)

The colloid mill used in the invention is a machine used to reduce the particle size of particles in a dispersion system in which the particles float in a liquid. The colloid mill includes a combination of a rotor and a stator, and the rotor rotates at a high speed with respect to the fixed stator. The colloid mill is used to reduce the particle size of the particles in the liquid by high-level shearing generated by high-speed rotation.

A pulverizing unit in the colloid mill includes a combination of a tooth-shaped truncated cone-shaped rotor and a stator, and the rotor and the stator each have a tapered shape that becomes narrower toward a dispensing port. The laminated film is repeatedly subjected to strong shearing, compression, and impact in a ring-shaped gap that becomes narrower toward the dispensing port, and is pulverized.

The colloid mill is not particularly limited as long as it is a disperser generally called a colloid mill, and specific examples of the colloid mill include colloid mill MK series manufactured by IKA Co., Ltd., WCM series manufactured by IWAKI Co., Ltd., PUC colloid mill series manufactured by Mountech Co., Ltd., and CAVITRON manufactured by EUROTECH Co., Ltd.

By crushing the plastic laminate in water using the above wet crusher, the plastic laminate can be separated into single layer films and a plastic substrate. In addition, in most cases, the plastic laminate is provided with an adhesive and a printing ink layer for displaying a product name or the like or imparting decoration, and the printing layer is often printed with an organic solvent-based printing ink or an aqueous type or active energy ray-curable ink using a gravure printing machine, a flexographic printing machine, an offset printing machine, an inkjet printing machine, or the like. In the plastic laminate provided with such an ink layer, the plastic laminate may be crushed in a cleaning agent in order to peel off and remove the ink layer more efficiently. By crushing the plastic laminate in the cleaning agent, the peeling and removal of the ink layer provided on the plastic laminate and the single layer separation of the plastic laminate can be simultaneously performed. For example, the most frequently used ink for plastic laminated films including those for food packaging is a gravure ink or a flexo ink, and in the wet crushing step using a cleaning agent, the printing ink layer can also be peeled off. In addition, a metal foil such as aluminum or a vapor deposition film may be laminated on the laminated film, and in the invention, the metal foil or the vapor deposition film can also be peeled off or dissolved.

(Water or Cleaning Agent)

In the wet crushing facility and the step 1 of separating the laminate into the single layers according to the invention, the laminate is crushed in the liquid, that is, in water or a cleaning agent. As the cleaning agent used in the step 1, one of cleaning agents 1 to 3 can be used alone, or two or more thereof can be used in combination as appropriate.

(Cleaning Agent 1)

The cleaning agent 1 is an aqueous cleaning agent containing water and an inorganic base. A sodium hydroxide aqueous solution or a potassium hydroxide aqueous solution is more preferable. The sodium hydroxide aqueous solution or the potassium hydroxide aqueous solution is preferably an aqueous solution having a concentration of 0.1 mass% to 10 mass%, and more preferably an aqueous solution having a concentration of 0.1 mass% to 5 mass%. In addition, the pH is preferably 10 or more.

(Cleaning Agent 2)

The cleaning agent 2 is a cleaning agent containing 20 mass% or more of an alkylene glycol alkyl ether represented by a general formula (1).

$$R^1\text{-}O\text{-}[CH_2\text{-}CH(X)\text{-}O]n^1\text{-}R^2 \qquad (1)$$

(In the general formula (1), $R^1$ represents an alkyl group having 1 or more carbon atoms, $R^2$ represents an alkyl group having 1 or more carbon atoms or hydrogen, $n^1$ represents an integer of 1 to 3, and X represents hydrogen or a methyl group.)

Among the alkylene glycol alkyl ethers represented by the general formula (1), a water-soluble alkylene glycol alkyl ether is more preferable.

Examples of the water-soluble alkylene glycol alkyl ether represented by the general formula (1) include ethylene glycol monomethyl ether, ethylene glycol monoethyl ether, ethylene glycol monopropyl ether, ethylene glycol monobutyl ether, ethylene glycol dimethyl ether, ethylene glycol diethyl ether, ethylene glycol dipropyl ether, ethylene glycol methyl ethyl ether, ethylene glycol methyl propyl ether, ethylene glycol ethyl propyl ether, ethylene glycol monobutyl ether, ethylene glycol-tert-butyl ether, diethylene glycol monomethyl ether, diethylene glycol monoethyl ether, diethylene glycol monopropyl ether, diethylene glycol monobutyl ether, diethylene glycol dimethyl ether, diethylene glycol diethyl ether, diethylene glycol dipropyl ether, diethylene glycol methyl ethyl ether, diethylene glycol methyl propyl ether, diethylene glycol ethyl propyl ether, triethylene glycol monobutyl ether, propylene glycol monomethyl ether, propylene glycol monoethyl ether, propylene glycol monopropyl ether, propylene glycol monobutyl ether, propylene glycol dimethyl ether, and propylene glycol diethyl ether.

These alkylene glycol alkyl ethers may be used alone or in combination of two or more thereof as appropriate, and may also be used by mixing with water. There is no particular problem if the content of the alkylene glycol alkyl ether is 20 mass% or more. When water is the medium, the content is preferably 30 mass% or more, and most preferably 40 mass% or more. On the other hand, the upper limit may be 100 mass%, and it is preferable to use water as the medium from the viewpoint of the influence on the environment and the safety.

Among the water-soluble alkylene glycol alkyl ethers represented by the general formula (1), an alkylene glycol monoalkyl ether represented by a general formula (2) is more preferable.

$$R^1\text{-}O\text{-}[CH_2\text{-}CH(X)\text{-}O]n^1\text{-}R^2 \qquad (1)$$

(In the general formula (2), $R^2$ represents an alkyl group having 1 or more carbon atoms, $n^2$ represents an integer of 1 to 3, and X represents hydrogen or a methyl group.)

The alkylene moiety of the alkylene glycol monoalkyl ether represented by the general formula (2) is more preferably methylene, then ethylene, then propylene, and then butylene, from the viewpoint of more easily removing the ink layer. That is, a methylene glycol monoalkyl ether, an ethylene glycol monoalkyl ether, a propylene glycol monoalkyl ether, and a butylene glycol monoalkyl ether are preferable in this order.

The repetition of the glycol moiety of the alkylene glycol monoalkyl ether represented by the general formula (2) is more preferably n = 1, then n = 2, and then n = 3, from the viewpoint of more easily removing the ink layer. That is, among the repetition of ethylene, an ethylene glycol monoalkyl ether, a diethylene glycol monoalkyl ether, and a triethylene glycol monoalkyl ether are preferable in this order.

The monoalkyl moiety of the alkylene glycol monoalkyl ether represented by the general formula (2) is more preferably monomethyl, then monoethyl, then monopropyl, and then monobutyl, from the viewpoint of more easily removing the ink layer. That is, alkylene glycol monomethyl ether, alkylene glycol monoethyl ether, alkylene glycol monopropyl ether, and alkylene glycol monobutyl ether are preferable in this order.

Among these, diethylene glycol monomethyl ether and diethylene glycol monoethyl ether are particularly preferable in terms of the cleaning property, the environmental characteristics, and the flammability.

(Cleaning Agent 3)

The cleaning agent 3 is a cleaning agent containing 20 mass% or more of a primary or secondary monoalkanolamine having a boiling point of 150°C to 200°C.

Examples of the primary monoalkanolamine include monoethanolamine and 2-aminoisobutanol, and examples of the secondary monoalkanolamine include N-methylethanolamine, 2-ethylaminoethanol, and isopropanolamine. In the primary to secondary monoalkanolamines, substances other than those exemplified can be appropriately used as long as it has a boiling point of 150°C to 200°C.

In addition, these primary or secondary monoalkanolamines can be used alone or in combination of two or more thereof as appropriate, and can also be used by mixing with water. There is no particular problem if the content of the primary or secondary monoalkanolamine is 20 mass% or more. When water is the medium, the content is preferably 30 mass% or more, and most preferably 40 mass% or more. On the other hand, the upper limit may be 100 mass%, and it is preferable to use water as the medium from the viewpoint of the influence on the environment and the safety.

(Surfactant)

The cleaning agents 1 to 3 may contain a surfactant. Examples of the surfactant include various anionic surfactants, nonionic surfactants, cationic surfactants, and amphoteric surfactants, and among these, nonionic surfactants are preferable.

Examples of the nonionic surfactant include a polyoxyalkylene alkyl ether, a polyoxyethylene alkyl ether, a polyoxyethylene alkyl phenyl ether, a polyoxyethylene fatty acid ester, a sorbitan fatty acid ester, a polyoxyethylene sorbitan fatty acid ester, a polyoxyethylene sorbitol fatty acid ester, a glycerin fatty acid ester, a polyoxyethylene glycerin fatty acid ester, a polyglycerin fatty acid ester, a sucrose fatty acid ester, a polyoxyethylene alkylamine, a polyoxyethylene fatty acid amide, a fatty acid alkylolamide, an alkyl alkanolamide, acetylene glycol, an oxyethylene adduct of acetylene glycol, and a polyethylene glycol polypropylene glycol block copolymer. Among these, polyoxyethylene nonylphenyl ether, polyoxyethylene octylphenyl ether, polyoxyethylene dodecylphenyl ether, a polyoxyethylene alkyl ether, a polyoxyethylene fatty acid ester, a sorbitan fatty acid ester, a polyoxyethylene sorbitan fatty acid ester, a fatty acid alkylolamide, acetylene glycol, an oxyethylene adduct of acetylene glycol, and a polyethylene glycol polypropylene glycol block copolymer are preferable.

These surfactants may be used alone or in combination of two or more thereof. When the surfactant is added, the addition amount of the surfactant is preferably in the range of 0.001 mass% to 2 mass%, and more preferably in the range of 0.001 mass% to 1.5 mass%, based on the total amount of the cleaning agent.

(Liquid Temperature)

The liquid temperature of water or the cleaning agent used in the step 1 of the separation and recovery method according to the invention is not particularly limited as long as a liquid state is maintained, and it is usually preferable that the liquid temperature is 15°C to 90°C. The higher the cleaning effect is, the higher the liquid temperature is. The liquid temperature is preferably 40°C or higher, and a more effective liquid temperature is 65°C or higher, and more preferably 85°C or higher.

(Plastic Laminate)

The plastic laminate according to the invention to be separated and recovered by the wet crushing facility is a plastic laminate having at least two or more layers, and is a laminate having a plurality of layers such as an ink layer, an adhesive layer, and another plastic layer on a plastic substrate. That is, the plastic laminate in the invention is a laminate having at least a plastic substrate (F1) formed of a plastic film or the like, and a layer selected from an ink layer, an adhesive layer, and another plastic film layer (F2) different from F1. Such a laminate is not particularly limited, and examples thereof include a laminated film obtained by lamination and adhesion with a reactive adhesive used for food packaging and household goods. Of course, a laminated film obtained by lamination and adhesion with a non-reactive adhesive, for example, a thermoplastic resin adhesive, and a laminated film obtained by thermal fusion by using an extrusion lamination method can also be separated and recovered into single layer films by the separation and recovery method according to the invention. In addition, a laminate having a sheet shape or a container shape may be used. That is, the invention is characterized in that the waste plastic laminate having various kinds of resin layers is not particularly required to be re-classified and can be treated together in recycling.

In addition, the laminate according to the invention is not limited to a configuration in which a plurality of films are laminated and adhered, and examples thereof include a configuration having only the plastic substrate (F1) and the printing layer. According to the invention, since the printing layer can be easily removed, the quality of the recycled plastic can be improved.

In addition, for example, in a container such as a PET bottle, a shrink label, which is a laminated film formed in a cylindrical shape, is used in order to display a product name or the like and impart decoration. During recycling, the consumer peels off the shrink label and separately discards the PET bottle body and the shrink label. However, in the separation and recovery method according to the invention, even in a state where the PET bottle body and the shrink label are integrated with each other, the shrink label can be separated from the PET bottle body and the shrink label can be separated into single layer films.

In the laminated film obtained by lamination and adhesion with a reactive adhesive, which is to be subjected to the separation and recovery method, an adhesive layer made of the reactive adhesive is often laminated between at least two resin film layers or metal foil or vapor deposition film layers. Specifically, in the laminated film, when the resin film layer is represented as (F), the metal foil layer of the metal foil or the vapor deposition film layer is represented as (M), and the adhesive layer made of the reactive adhesive is represented as (AD), the following configuration can be considered as specific aspects of the laminated film, while of course, the invention is not limited thereto.

(F)/(AD)/(F),
(F)/(AD)/(F)/(AD)/(F),
(F)/(AD)/(M)/(AD)/(F),
(F)/(AD)/(M),
(F)/(AD)/(M)/(F),
(F)/(AD)/(F)/(AD)/(M)/(AD)/(F),
(F)/(AD)/(M)/(AD)/(F)/(AD)/(F),
(M)/(AD)/(M),
(M)/(AD)/(F)/(AD)/(M),
(AD)/(F)/(AD)/(M),
(AD)/(F)/(AD)/(F)/(AD), and the like.

The laminated film to be subjected to the separation and recovery method may further have a paper layer, an oxygen absorbing layer, an anchor coat layer, and a printing layer.

In the case of having a printing layer (ink layer), a location where the ink layer is provided is not particularly limited. For example, the ink layer may be provided on the outermost layer of the laminated film, or may be provided between the resin film layer (F) and the adhesive layer (AD). In the case where the ink layer is provided between the resin film layer (F) and the adhesive layer (AD) (back printing), the ink layer and the adhesive layer are more firmly bonded to each other, so that the ink layer is difficult to be peeled off. According to the method in the invention, the single layer separation of the laminate and the removal of the ink layer can be simultaneously and efficiently performed.

The resin film layer (F) functions as a substrate film layer (F1), a sealant layer (F2) serving as a heat-sealed portion when a packaging material is formed, or the like when classified according to a required role.

Examples of the resin film to be the substrate film layer (F1) include: polyolefin-based films such as low-density polyethylene, high-density polyethylene, linear low-density polyethylene, biaxially stretched polypropylene (OPP), and non-stretched polypropylene (CPP); polyester-based films such as polyethylene terephthalate (PET) and polybutylene terephthalate; polyamide-based films such as nylon 6, nylon 6,6, and meta-xylene adipamide (N-MXD6); biodegradable films such as polylactic acid; polyacrylonitrile-based films; poly(meth)acrylic films; polystyrene-based films; polycarbonate-based films; ethylene-vinyl acetate copolymer saponified product (EVOH)-based films; polyvinyl alcohol-based films; and films containing these pigments of K coat such as polyvinylidene chloride. Transparent vapor deposition films obtained by vapor depositing alumina, silica, or the like on these films may also be used.

In addition, the surface of the film material may be subjected to various surface treatments such as a flame treatment, a corona discharge treatment, and a chemical treatment using a primer or the like.

A flexible polymer film to be the sealant layer (F2) is preferably a polyethylene film, a polypropylene film, a polyolefin-based film such as an ethylene-vinyl acetate copolymer, or films of an ionomer resin, an EAA resin, an EMAA resin, an EMA resin, an EMMA resin, and a biodegradable resin. The general-purpose name includes a non-stretched polypropylene (CPP) film, a vacuum-matellized cast polypropylene (VMCPP) film, a linear low-density polyethylene (LLDPE) film, a low-density polyethylene (LDPE) film, a high-density polyethylene (HDPE) film, a vacuum-matellized low-density polyethylene (VMLDPE) film, or a film containing these pigments. The surface of the film may be subjected to various surface treatments such as a flame treatment, a corona discharge treatment, and a chemical treatment using a primer or the like.

Examples of the metal foil layer (M) include a metal foil having excellent spreadability, such as gold, silver, copper, zinc, iron, lead, tin, an alloy thereof, steel, stainless steel, and aluminum.

Examples of the paper layer include natural paper and synthetic paper. First and second sealant layers may be formed of a material same as that of the sealant layer described above.

Another layer may contain a known additive or stabilizer, for example, an antistatic agent, a non-reactive adhesive layer, an easy-adhesion coating agent, a plasticizer, a lubricant, or an antioxidant.

Next, a specific embodiment of a recycling system using the wet crushing facility will be described. Note that the recycling system described below is an example, and the invention is not limited thereto.

(1) Selection of Waste Plastic

Waste plastics such as easy-to-use plastic packages are collected in equipment including a recycling facility in order to be recycled into a recycled material. When foreign substances such as earth and sand, glass, ceramics, and metals are mixed in the collected waste plastics, it is preferable to remove these foreign substances. In addition, it is preferable to select and separate a molded article, a film or a sheet-shaped plastic laminate from the waste plastics. The removal of the foreign substances and the selection of the plastic include, for example, an inspection and manual selection operation by human beings, removal of small foreign substances by a sieve, metal removal by magnetic selection using a magnetic force, wind selection for dividing plastics and foreign substances having different specific gravities by the wind power, and selection by a sensor. The selection may not be performed depending on a mixing state of the foreign substances in the waste plastics.

(2) Cutting

The selected plastic laminate may be cut into plastic pieces having a size of, for example, about 30 cm square. By going through the cutting step, crushing in the wet crusher in the next step can be performed more efficiently. Known crushers can be used for the cutting, and examples thereof include impact crushers such as a hammer crusher and a rotary crusher, shredders, and cutters. The size and shape of the cut plastic laminate pieces are not particularly limited, and the maximum length of the plastic piece is, for example, preferably 50 cm or less, preferably 30 cm or less, preferably 20 cm or less, and preferably 10 cm or less.

After the cutting step, the selection operation for the plastic performed in the above (1) may be performed again, or the cutting in (2) may be performed before the selection of the waste plastic is performed in the above (1). In addition, crushing by the wet crusher in the next step may be performed without performing the cutting.

(3) Separation Step of Plastic Laminate (Step 1)

The collected plastic laminate pieces are sequentially charged into the wet crusher filled with a cleaning liquid heated to about 85°C. The cleaning liquid may be water or a cleaning agent. For example, the laminated film obtained by cutting a laminated film roll into a size of about 30 cm square is drawn into a crushing portion by the absorption of the wet crusher, crushed to about 5 mm to 20 mm, and pressure-fed to the next step at 0.03 $m^3$/min. At this time, the laminated film is separated into single layers for respective films due to high shearing received when the charged film is crushed. When the ink layer is provided on the laminated film, the ink layer is also peeled off and removed from the film by the high shearing due to crushing.

Even if a wet crushing target is not the laminated film roll but an individual film bag recovered from the market, the individual film bag can be charged into the wet crusher as it is in the recovered state.

In the step 1, the wet crushing step may be performed once or several times. That is, after the wet crushing is performed once, the step 2 of recovering the separated single layer film of each layer may be performed, or after the wet crushing is performed several times, the step 2 may be performed. In addition, when the wet crushing step is performed a plurality of times in the step 1, the cleaning agent may be changed. In addition, known steps such as water washing, draining, dehydration, and drying may be appropriately added between these steps.

(4) Recovery Step of Crushed Mixture of Each Separated Single Layer (Step 2)

When the laminated film having the adhesive layer is wet-crushed in the step 1, the adhesive layer separated from the laminated film is not dissolved in water or the cleaning agent and becomes a residue in the cleaning liquid in most cases. That is, in water or the cleaning agent in the step 1, the separated single layer film of each layer and the residue such as the adhesive, the printing ink, and the metal foil are suspended or dissolved. The single layer film and the residue are taken out from water or the cleaning agent, and then classified and recovered.

As a specific example of the method, for example, in floatation selection, plastics having a low specific gravity such as polyolefins such as polypropylene or polyethylene (floats), condensation synthetic films such as polyesters or nylon having a specific gravity higher than that of the polyolefin, or mass substances such as a metal foil are selected, the mass substances are removed, then the recovered plastics are cleaned and dehydrated in a cleaning and dehydrating step, and the plastics having different specific gravities are classified by centrifugation. For example, the plastics can be divided into a plastic separated material containing a vinyl chloride resin, polyethylene terephthalate, or the like having a specific gravity of 1 or more sinking in water, and a plastic separated material containing an olefin-based resin such as polyethylene or polypropylene not containing a vinyl chloride resin. Further separation can be performed by changing the specific gravity by appropriately changing the mixing ratio in the liquid used in the floating selection, such as water and an organic solvent or a salt.

After rough classification and recovery by specific gravity separation, high degree of classification may be performed by using electrostatic separation or the like utilizing the inherent charging characteristics of the plastic.

An example of a specific method is a method of separating a previously charged plastic mixture by dropping the mixture between parallel plate electrodes to which a voltage is applied. A combination of plastics having a small specific gravity difference, which is difficult to separate by the specific gravity separation, can also be classified.

(5) Recovery and Reuse of Cleaning Solution (Step 3)

Water or the cleaning agent used in the steps 1 and 2 is supplied to any one or more cleaning agent recycling machines selected from a filter, a centrifugal separator, and an ultrafiltration machine in order to recover the cleaning agent, and is reused after the solid matter is removed. While the wet crushing step and the specific gravity separation step are performed in the steps 1 and 2, a reusing step for water or the cleaning agent can be continuously operated to separate the solid matter from the cleaning agent.

(6) Drying of Plastic Separated Material (Step 4)

After collecting the single layer plastic separated material obtained by separating the laminate in the step 2, specifically, a variety of single layer film pieces, the film pieces are dried by any one or more selected from vacuum heat drying, hot air drying, and pressure compression drying in order to remove residual moisture. These can be used in combination. As a pretreatment for preparing recycled pellets in step 5, briquettes may be prepared using a pressure compressor such as a briquette machine after or during drying of the film pieces.

(7) Preparation of Recycled Pellets (Step 5)

The film pieces or briquettes dried in the step 4 are charged into a uniaxial and biaxial molding machine to prepare the recycled pellets. Conditions in the kneading machine are not particularly limited, and the kneading machine is preferably operated at 180°C to 280°C in order not to significantly deteriorate the resin performance before recycling.
In the invention, the "step 1", that is, the separation of the plastic laminate into single layers while crushing the plastic laminate in water or the cleaning agent, and the peeling off and removal of the ink layer when the ink layer is provided on the plastic laminate, can be simultaneously performed. The reason is presumed that, when the plastic laminate is crushed, the high shearing force received from the wet crushing pump has an effect on the separation of the laminate and the removal of the ink layer simultaneously with the crushing of the film. Since the shearing force is so high that the laminate is crushed, it is not easily achieved by a high-speed stirrer, an ultrasonic cleaner, or the like.

[Examples]

Hereinafter, the contents and effects of the invention will be described in more detail with reference to Examples. In addition, films, printing inks, reactive adhesives, and organic solvents used as materials in Examples and Comparative Examples are shown below.

(Films Used for Laminated Film)

OPP: biaxially stretched polypropylene film, 20 μm
PET: polyethylene terephthalate film, 12 μm
OPA: polyamide film (nylon) film, 15 μm
CPP: non-stretched polypropylene film, 35 μm
LLDPE: non-stretched linear low-density polyethylene film, 60 μm
VMCPP: vacuum-matellized cast polypropylene film, 25 μm

(Printing Ink)

Gravure ink for solvent type front printing
INK1: Front printing ink GROSSABM709 white, manufactured by DIC Graphics Corporation
Gravure ink for solvent type back printing
INK2: Back printing ink FINART R794 White S, manufactured by DIC Graphics Corporation
Flexo ink for aqueous back printing
INK3: Marine flex LM R507 primary color indigo, manufactured by DIC Graphics Corporation

(Reactive Adhesive)

AD1: Solvent type adhesive DICDRY LX-401A and SP-60, two-liquid adhesive (ether-based adhesive)
AD2: Solvent-free adhesive DICDRY 2K-SF-400A and HA-400B, two-liquid adhesive (ester-based adhesive)

(Method for Producing Laminated Film)

The laminated film was produced by performing printing on a target film by a printing method and then bonding the target film by a laminating method. A layer structure of the film and the types of the reactive adhesive and the printing ink were according to the combinations shown in Table 1.

(Printing Method)

The gravure ink and the flexo ink, i.e., printing inks, were each color-developed in a film "Film1" using a proofer.

(Laminating Method)

With respect to LAM3 to LAM7, a reactive adhesive "AD" was applied by a laminator to a color-developed surface of the printing ink or a surface opposite to the color-developed surface of the printing ink in the film "Film1" in which the printing ink was color-developed so as to have a coating amount of 3 $g/m^2$ in terms of the solid content, and a film "Film2" was bonded to the film "Film1". The laminated film thus bonded was subjected to an aging reaction at 40°C for 72 hours. Laminated films "LAM1" to "LAM7" shown in Table 1 were obtained. Note that blank columns indicate that there is no configuration.

[Table 1]

| Table 1 Laminated film configuration | Film 1 | Ink | Ad | Film2 |
|---|---|---|---|---|
| LAM 1 | CPP | Ink 1 | | |
| LAM2 | PET | Ink 1 | | |
| LAM3 | OPP | Ink2 | AD1 | VMCPP |
| LAM4 | OPP | Ink2 | AD2 | VMCPP |
| LAM5 | OPA | Ink2 | AD1 | CPP |
| LAM6 | OPP | Ink2 | AD1 | CPP |
| LAM7 | OPP | Ink2 | AD1 | LLDPE |

The laminated films "LAM1" to "LAM7" were each cut into a size of 30 cm × 30 cm to obtain a test piece.

(Cleaning Step)

PRO1: a SUNCUTTER C125H manufactured by Nikuni Corporation was used and the mixture was pressure-fed at 0.1 $m^3$/min.
PRO2: an ultrasonic cleaner was used and immersion was performed at 28 kHz for 30 minutes.
PRO3: a homodisper was used and the mixture was stirred at 2,000 rpm for 30 minutes.
PRO4: a colloid mill WCM manufactured by IWAKI Co., Ltd., was used and the mixture was pressure-fed at 0.03 $m^3$/min.
PRO5: a high-speed mixer FS2 type manufactured by EARTHTECHNICA Co., Ltd. was used and the mixture was stirred at 2,000 rpm for 30 minutes.

Tables 2 and 3 show the results of the ink peeling and laminated film separation test. Note that in Examples 1 to 5 and Comparative Examples 1 to 4, water was used in the cleaning step.

(Peeling Property of Laminated Film)

The result 1 in the tables shows an ink peeling state from the laminated film and a laminated film separation state. After the laminated film was cleaned and dried in the cleaning step, the ink peeling property on a printed portion and the peeling property of the laminated film were determined by calculating an area by image processing a photograph taken using an optical microscope and determining the removal rate using the following equation.

$$\text{Peeling ratio (\%)} = (1 - \text{ink adhesion or film lamination area after cleaning/ink}$$

$$\text{adhesion or film lamination area before cleaning}) \times 100$$

A: at least 75% of the printed portion or the laminated portion is peeled off.
B: 50% to 74% of the printed portion or the laminated portion is peeled off.
C: 0% to 25% of the printed portion or the laminated portion is peeled off.

Note that A is in a range in which there is no problem in practical use.

(Crushing Degree of Laminated Film)

In the tables, the result 2 indicates a crushing state of the laminated film. After the laminated film was cleaned and dried in the cleaning step, the length of the laminated film in the crushing state was visually measured using a ruler.

A: the film is crushed to 20 mm or less in a short side direction.
C: the film is not crushed and has no change from an initial shape.

[Table 2]

| Table 2 Peeling test result | Example 1 | Example 2 | Example 3 | Example 4 | Example 5 |
|---|---|---|---|---|---|
| Laminated film | LAM3 | LAM4 | LAM5 | LAM6 | LAM7 |
| Liquid temperature | 85°C | 85°C | 85°C | 85°C | 85°C |
| Cleaning step | PRO 1 | PRO 1 | PRO 1 | PRO 1 | PRO 1 |
| Result 1 | A | A | A | A | A |
| Result 2 | A | A | A | A | A |

[Table 3]

| Table 3 Peeling test result | Comparative Example 1 | Comparative Example 2 | Comparative Example 3 | Comparative Example 4 |
|---|---|---|---|---|
| Laminated film | LAM 1 | LAM 1 | LAM3 | LAM5 |
| Liquid temperature | 85°C | 85°C | 85°C | 85°C |
| Cleaning step | PRO2 | PRO3 | PRO2 | PRO2 |
| Result 1 | C | C | C | C |
| Result 2 | C | C | C | C |

PRO1, which is a wet crusher, can peel off the laminate simultaneously with crushing, whereas PRO2 and PRO3, which are not wet crushers, cannot peel off the laminate simultaneously with crushing. In the result 1 of Examples 1 to 5, it is observed that the peeling state of Film1 and Film2 is 100%. Therefore, it is found that PRO1 is excellent in peeling the plastic layer and can sufficiently separate different types of plastics.
Subsequently, laminated films "LAM8 to LAM15" shown in Table 4 were obtained. Note that blank columns indicate that there is no configuration.

Table 4

| Table 4 Laminated film configuration | Film 1 | Ink | Ad | Film2 |
|---|---|---|---|---|
| LAM8 | CPP | Ink 1 | | |
| LAM9 | PET | Ink 1 | | |
| LAM10 | OPP | Ink2 | AD1 | VMCPP |
| LAM11 | OPP | Ink2 | AD2 | VMCPP |
| LAM12 | OPP | Ink3 | AD1 | VMCPP |
| LAM13 | OPA | Ink2 | AD1 | CPP |
| LAM14 | OPP | Ink2 | AD1 | CPP |
| LAM15 | OPP | Ink2 | AD1 | LLDPE |

The laminated films "LAM8" to "LAM15" were each cut into a size of 30 cm × 30 cm to obtain a test piece.

(Cleaning Agent Composition)

The cleaning agents to be filled in the wet crusher were combined as shown in Table 5 to obtain "CL1" to "CL8". The numbers in the table indicate mass%. Note that blank columns indicate no blending.

Table 5

| Table 5 Composition | CL1 | CL2 |
|---|---|---|
| Sodium hydroxide | 5 | 5 |
| Diethylene glycol monomethyl ether | | |
| N-methylethanolamine | | |
| NOIGEN XL-41 | | 1 |
| Water | 95 | 94 |

NOIGEN XL-41 in the table is a nonionic surfactant manufactured by DKS Co., Ltd.
Tables 6 to 8 show the results of ink peeling and laminated film separation test.

(Peeling Property with Cleaning Agent)

In the tables, the result 1 shows an ink peeling state from the laminated film and a laminated film separation state. After the laminated film was cleaned and dried in the cleaning step, the ink peeling property on a printed portion and the peeling property of the laminated film were determined by calculating an area by image processing a photograph taken using an optical microscope and determining the removal rate using the following equation.

$$\text{Peeling ratio } (\%) = (1 - \text{ink adhesion or film lamination area after cleaning/ink}$$

$$\text{adhesion or film lamination area before cleaning}) \times 100$$

A: 100% of the printed portion or the laminated portion is peeled off.
AB: 75% to 99% of the printed portion or the laminated portion is peeled off.
B: 50% to 74% of the printed portion or the laminated portion is peeled off.
BC: 25% to 49% of the printed portion or the laminated portion is peeled off.
C: 0% to 25% of the printed portion or the laminated portion is peeled off.
Note that A and AB are in a range in which there is no problem in practical use.

(Crushing Degree of Laminated Film)

In the tables, the result 2 indicates a crushing state of the laminated film. After the laminated film was cleaned and dried in the cleaning step, the length of the laminated film in the crushing state was visually measured using a ruler.

A: the film is crushed to 20 mm or less in a short side direction.
B: the film is crushed to a size of 21 mm to 50 mm in the short side direction.
C: the film is not crushed and has no change from an initial shape.

Note that A and B are in a range in which there is no problem in practical use.

Table 6

| Table 6 Peeling test result | Example 6 | Example 7 | Example 8 | Example 9 | Example 10 | Example 11 |
|---|---|---|---|---|---|---|
| Laminated film | LAM8 | LAM9 | LAM10 | LAM11 | LAM12 | LAM13 |
| Cleaning agent composition | CL2 | CL2 | CL1 | CL2 | CL1 | CL2 |
| Liquid temperature | 85°C | 85°C | 85°C | 85°C | 85°C | 85°C |
| Cleaning step | PRO1 | PRO4 | PRO1 | PRO4 | PRO1 | PRO1 |
| Result 1 | AB | AB | AB | A | AB | A |
| Result 2 | A | B | A | B | A | A |

Table 7

| Table 6 Peeling test result | Example 12 | Example 13 | Example 14 | Example 15 |
|---|---|---|---|---|
| Laminated film | LAM14 | LAM15 | LAM8 | LAM10 |
| Cleaning agent composition | CL1 | CL2 | CL2 | CL1 |
| Liquid temperature | 85°C | 85°C | 15°C | 15°C |
| Cleaning step | PRO4 | PRO1 | PRO1 | PRO1 |
| Result 1 | AB | A | AB | AB |
| Result 2 | B | A | A | A |

Table 8

| Table 7 Peeling test result | Comparative Example 5 | Comparative Example 6 | Comparative Example 7 | Comparative Example 8 | Comparative Example 9 |
|---|---|---|---|---|---|
| Laminated film | LAM8 | LAM8 | LAM8 | LAM10 | LAM10 |
| Cleaning agent composition | CL1 | CL1 | CL1 | CL1 | CL1 |
| Liquid temperature | 85°C | 85°C | 85°C | 20°C | 85°C |
| Cleaning step | PRO2 | PRO3 | PRO5 | PRO2 | PRO2 |
| Result 1 | A | A | A | C | B |
| Result 2 | C | C | C | C | C |

PRO1 and PRO4, which are wet crushers, can perform the crushing on LAM8 to LAM15 which are all laminated film configurations, whereas PRO2, PRO3, and PRO5, which are not wet crushers, cannot perform the crushing.

In PRO1 and PRO4, the cleaning agent containing an alkaline solution containing 1 mass% of sodium hydroxide can peel off the ink and separate the film from the laminated film. In PRO2, PRO3, and PRO5, the ink can be peeled off but cannot be crushed in LAM8.

**Claims**

1. A recycling system for recycling a plastic laminate having at least two or more layers into a recycled material, the recycling system comprising:

   a wet crushing facility configured to separate the laminate into single layers while crushing the laminate in water or a cleaning agent by performing pressure feeding simultaneously with the crushing; and
   a facility configured to dispense and recover a crushed mixture in each of the separated single layers.

2. The recycling system according to claim 1, wherein
   the wet crushing facility capable of the pressure feeding simultaneously with the crushing is a facility configured to perform the crushing by a shearing force and/or a frictional force.

3. The recycling system according to claim 1 or 2, wherein the cleaning agent is an aqueous cleaning agent according to any one of (1) to (3):

   (1) an aqueous cleaning agent containing water and 0.1 mass% to 10 mass% of an inorganic base,
   (2) an aqueous cleaning agent containing 20 mass% or more of an alkylene glycol alkyl ether represented by a general formula (1),

   $$R^1\text{-O-}[CH_2\text{-CH(X)-O}]n^1\text{-R}^2 \qquad (1)$$

   (in the formula, $R^1$ represents an alkyl group having 1 or more carbon atoms, $R^2$ represents an alkyl group having 1 or more carbon atoms or hydrogen, $n^1$ represents an integer of 1 to 3, and X represents hydrogen or a methyl group), and
   (3) an aqueous cleaning agent containing 20 mass% or more of a primary or secondary monoalkanolamine having a boiling point of 150°C to 200°C.

4. The recycling system according to any one of claims 1 to 3, wherein
   a liquid temperature of the water or the cleaning agent in the step 1 is 15°C to 90°C.

5. The recycling system according to any one of claims 1 to 4, wherein
   a dispensing speed in the step 2 is 0.03 $m^3$/min or more.

6. The recycling system according to any one of claims 1 to 5, further comprising:
   a facility configured to classify the single layers after the wet crushing facility separates the laminate into the single layers.

7. The recycling system according to any one of claims 1 to 6, wherein
   a laminated film is selected from a waste plastic, and then the laminated film is wet-crushed.

8. The recycling system according to any one of claims 1 to 7, wherein

   the plastic laminate has an ink layer, and
   in the wet crushing facility, the ink layer provided on the laminate is peeled off and removed while the laminate is crushed in the cleaning agent.

9. The recycling system according to any one of claims 1 to 8, wherein
   the crushed mixture of the single layer of the plastic laminate separated and recovered by the wet crushing facility is melted and then molded by a molding machine.

10. A recycling method for recycling a plastic laminate having at least two or more layers into a recycled material, the recycling method comprising:

a step 1 of separating the laminate into single layers while crushing the laminate in water or a cleaning agent using a wet crusher capable of performing pressure feeding simultaneously with crushing; and
a step 2 of dispensing and recovering a crushed mixture of each of the separated single layers.

11. A plastic laminate separation and recovery method for a plastic laminate having at least two or more layers, the method comprising:

a step 1 of separating the laminate into single layers while crushing a laminated film in water or a cleaning agent using a wet crusher capable of performing pressure feeding simultaneously with crushing; and
a step 2 of dispensing and recovering a crushed mixture of each of the separated single layers.

12. A method for producing a recycled plastic pellet, comprising:
melting and then molding, by a molding machine, the crushed mixture of the single layer of the plastic laminate separated and recovered by the method according to claim 11.

| | **INTERNATIONAL SEARCH REPORT** | International application No. |
|---|---|---|
| | | PCT/JP2021/016238 |

**A. CLASSIFICATION OF SUBJECT MATTER**
B29B 17/04(2006.01)i; B29B 17/02(2006.01)i; C08J 11/06(2006.01)i; C08J 11/08(2006.01)i; C09D 9/00(2006.01)i; C11D 1/72(2006.01)i; C11D 3/04(2006.01)i; C11D 3/30(2006.01)i
FI:     B29B17/04  ZAB;   C08J11/06;   C11D1/72;   C11D3/04;   C11D3/30; C08J11/08; C09D9/00; B29B17/02 ZAB

According to International Patent Classification (IPC) or to both national classification and IPC

**B. FIELDS SEARCHED**

Minimum documentation searched (classification system followed by classification symbols)
B29B17/04; B29B17/02; C08J11/06; C08J11/08; C09D9/00; C11D1/72; C11D3/04; C11D3/30

Documentation searched other than minimum documentation to the extent that such documents are included in the fields searched
Published examined utility model applications of Japan        1922–1996
Published unexamined utility model applications of Japan     1971–2021
Registered utility model specifications of Japan              1996–2021
Published registered utility model applications of Japan      1994–2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2004-42461 A (MATSUSHITA ECOTECHNOLOGY CENTER KK) 12 February 2004 (2004-02-12) claims 1, 4, paragraphs [0004]–[0005], [0026], [0054]–[0055] | 1-3, 5-6, 8-12<br>1-12 |
| Y | JP 2017-155199 A (TOHPE CORPORATION) 07 September 2017 (2017-09-07) paragraph [0027] | 3 |
| Y | JP 2017-182049 A (MITSUBISHI PAPER MILLS LIMITED) 05 October 2017 (2017-10-05) claims 1, 4 | 3 |
| Y | JP 2013-173239 A (WISCONSIN FILM & BAG INC.) 05 September 2013 (2013-09-05) paragraph [0002] | 7 |

☒  Further documents are listed in the continuation of Box C.          ☒  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 01 July 2021 (01.07.2021) | 20 July 2021 (20.07.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.

PCT/JP2021/016238

C (Continuation).    DOCUMENTS CONSIDERED TO BE RELEVANT

| Category* | Citation of document, with indication, where appropriate, of the relevant passages | Relevant to claim No. |
|---|---|---|
| Y | WO 2020/059516 A1 (DIC CORPORATION) 26 March 2020 (2020-03-26) claim 1, paragraphs [0022], [0011], [0013], [0046], table 3 | 1-12 |
| Y | WO 2020/066652 A1 (DIC CORPORATION) 02 April 2020 (2020-04-02) claim 1, paragraphs [0024], [0012], [0015]-[0016], table 6 | 1-12 |
| Y | JP 2008-200952 A (THE CHUGOKU ELECTRIC POWER CO., INC.) 04 September 2008 (2008-09-04) paragraph [0034] | 1-12 |
| Y | JP 2003-80520 A (MISAWA HOMES CO., LTD.) 19 March 2003 (2003-03-19) paragraph [0039] | 9, 12 |
| A | JP 7-108532 A (TOYOTA MOTOR CORP.) 25 April 1995 (1995-04-25) claim 1 | 1-12 |

Form PCT/ISA/210 (continuation of second sheet) (January 2015)

**INTERNATIONAL SEARCH REPORT**
Information on patent family members

International application No.

PCT/JP2021/016238

| Patent Documents referred in the Report | Publication Date | Patent Family | Publication Date |
|---|---|---|---|
| JP 2004-42461 A | 12 Feb. 2004 | (Family: none) | |
| JP 2017-155199 A | 07 Sep. 2017 | (Family: none) | |
| JP 2017-182049 A | 05 Oct. 2017 | (Family: none) | |
| JP 2013-173239 A | 05 Sep. 2013 | (Family: none) | |
| WO 2020/059516 A1 | 26 Mar. 2020 | (Family: none) | |
| WO 2020/066652 A1 | 02 Apr. 2020 | (Family: none) | |
| JP 2008-200952 A | 04 Sep. 2008 | (Family: none) | |
| JP 2003-80520 A | 19 Mar. 2003 | (Family: none) | |
| JP 7-108532 A | 25 Apr. 1995 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006205160 A
- JP 2015520684 T
- JP 2016509613 T
- JP 2018514384 T

**Non-patent literature cited in the description**

- *Science Advances,* 19 July 2017, vol. 3 (7), e1700782